(19) Europäisches Patentamt
European Patent Office
Office européen des brevets

(11) **EP 1 889 092 B1**

(12) **EUROPÄISCHE PATENTSCHRIFT**

(45) Veröffentlichungstag und Bekanntmachung des Hinweises auf die Patenterteilung:
**14.04.2010 Patentblatt 2010/15**

(21) Anmeldenummer: **06742886.2**

(22) Anmeldetag: **12.05.2006**

(51) Int Cl.:
*G01S 13/95* *(2006.01)*　　*G01W 1/10* *(2006.01)*
*G01S 7/292* *(2006.01)*　　*G01S 7/41* *(2006.01)*

(86) Internationale Anmeldenummer:
**PCT/EP2006/004469**

(87) Internationale Veröffentlichungsnummer:
**WO 2006/122712 (23.11.2006 Gazette 2006/47)**

(54) **VERFAHREN UND VORRICHTUNG ZUM KORRIGIEREN VON WETTERDATEN SOWIE COMPUTERPROGRAMMPRODUKT**

METHOD AND DEVICE FOR THE CORRECTION OF WEATHER DATA AND COMPUTER PROGRAM PRODUCT

PROCEDE ET DISPOSITIF POUR CORRIGER DES DONNEES METEOROLOGIQUES ET PROGICIEL INFORMATIQUE CORRESPONDANT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **19.05.2005 DE 102005023787**

(43) Veröffentlichungstag der Anmeldung:
**20.02.2008 Patentblatt 2008/08**

(73) Patentinhaber: **Selex Systems Integrtion GmbH**
**41429 Neuss (DE)**

(72) Erfinder:
• **HANNESEN, Ronald**
**40223 Düsseldorf (DE)**
• **KAMMER, Axel**
**53639 Königswinter (DE)**
• **WEIPERT, André**
**41844 Wegberg (DE)**

(74) Vertreter: **Sparing Röhl Henseler**
**Patentanwälte**
**European Patent Attorneys**
**Postfach 14 04 43**
**40074 Düsseldorf (DE)**

(56) Entgegenhaltungen:
WO-A-03/008910　　GB-A- 2 011 749
US-A- 4 068 231　　US-A- 5 523 759

• EVANS J E ET AL: "Terminal Doppler weather radar clutter control" IEEE INTERNATIONAL RADAR CONFERENCE, 7. Mai 1990 (1990-05-07), Seiten 12-16, XP010007437
• GLASS J M ET AL: "Flexible Doppler weather radar implementation" RADAR CONFERENCE, 1993., RECORD OF THE 1993 IEEE NATIONAL LYNNFIELD, MA, USA 20-22 APRIL 1993, NEW YORK, NY, USA,IEEE, US, 20. April 1993 (1993-04-20), Seiten 23-27, XP010067912 ISBN: 0-7803-0934-0
• HE JIANXIN: "CINRAD WSR-98D and its ground clutter filter design" RADAR, 2001 CIE INTERNATIONAL CONFERENCE ON, PROCEEDINGS OCT 15-18, 2001, PISCATAWAY, NJ, USA,IEEE, 15. Oktober 2001 (2001-10-15), Seiten 1186-1189, XP010578026 ISBN: 0-7803-7000-7
• LIGTHART L P; NIEUWKERK L R: "AN X-BAND SOLID-STATE FM-CW WEATHER RADAR" IEE PROCEEDINGS F. COMMUNICATIONS, RADAR AND SIGNALPROCESSING, XP000176784

## Beschreibung

Die Erfindung betrifft ein Verfahren und eine Vorrichtung zum Korrigieren von Wetterdaten sowie ein Computerprogrammprodukt nach dem Oberbegriff des Anspruchs 1, 18 bzw. 20.

Bei der Erfassung von Wetterdaten mittels eines bodengestützten Wetterradars beispielsweise zur Wetterbeobachtung in der Nähe von Flughäfen werden neben Wetterechos, d.h. Echos von Wolken und Niederschlag usw., auch Bodenechos, d.h. Echos von Hindernissen wie Gebäuden, Bergen, Bäumen usw. vom Wetterradar aufgenommen. Zum Herausfiltern der auch als Clutter bezeichneten Bodenechos aus der Intensitätsverteilung der Echos sind zwei Ansätze bekannt. Einerseits kann aus der Intensitätsverteilung einer mit Clutter verunreinigten Messung eine Cluttermap subtrahiert werden, in der eine Intensitätsverteilung nur mit Boden- und ohne Wetterechos gespeichert ist und die unter geeigneten Wetterbedingungen aufgenommen worden ist. Andererseits können durch Vergleich der Meßwerte mit Werten der Cluttermap diejenigen Bereiche, die hinreichend mit Clutter verunreinigt sind, bestimmt und durch Inter- oder Extrapolation aus Bereichen, die nicht hinreichend mit Clutter verunreinigt sind, ersetzt werden.

Sowohl bei der Subtraktion als auch bei der Inter- oder Extrapolation sind diverse Schwellenwerte und komplexe Algorithmen zu verwenden, die zudem nur die Intensität des Echos korrigieren. Für die Wetterdaten differentielle Reflektivität sind keine geeigneten Korrekturmöglichkeiten unter Beibehaltung eines gültigen Werts bekannt.

Aus J.E. Evans et al.:TERMINAL DOPPLER WEATHER RADAR CLUTTER CONTROL, IEEE International Radar Conference, 1990, S. 12-16, ist das Eliminieren bzw. Streichen von Wetterdaten bekannt. Die Wetterdaten werden in Form einer Windgeschwindigkeit unter Zuhilfenahme einer zuvor gespeicherten Cluttermap eliminiert.

Aus L.P. Ligthart et al.: "An X-band solid-state FM-CW weather radar", IEEE Proceedings, Bd. 137, Heft 6, 1990, S. 418-426 ist ein FMCW-Radar bekannt, dessen Spektren korrigiert werden, woraus sich Geschwindigkeit und spektrale Breite berechnen lassen.

Der Erfindung liegt daher die Aufgabe zugrunde, ein Verfahren und eine Vorrichtung zum Korrigieren von Wetterdaten sowie ein Computerprogrammprodukt nach dem Oberbegriff des Anspruchs 1, 18 bzw. 20 zu schaffen, mit denen die Wetterdaten differentielle Reflektivität zuverlässig und einfach unter Beibehaltung eines gültigen Werts korrigierbar sind.

Diese Aufgabe wird entsprechend den Merkmalen der Ansprüche 1, 18 bzw. 20 gelöst.

Hierdurch können auch Wetterdaten vom Typ Radialgeschwindigkeit, spektrale Breite und differentielle Reflektivität automatisiert von Clutter bereinigt werden. Die automatisierte Korrektur dieser Wetterdaten ermöglicht beispielsweise eine Verbesserung der Zuverlässigkeit der Unwettererkennung und bei hydrologischen Anwendungen, die bisher, d.h. wenn nur die Intensitätswerte korrigiert werden, häufig inkorrekte Ergebnisse liefern.

Weitere Ausgestaltungen der Erfindung sind der nachfolgenden Beschreibung und den Unteransprüchen zu entnehmen.

Die Erfindung wird nachstehend anhand von in den beigefügten Figuren dargestellten Ausführungsbeispielen näher erläutert.

Fig. 1 illustriert ein bodengestütztes radarbasiertes Fernerkundungsgerät.
Fig. 2A, 2B illustriert jeweils eine Interpolation.
Fig. 3 illustriert Abschattungen.
Fig. 4 illustriert die Berechnung eines Höhenunterschieds.

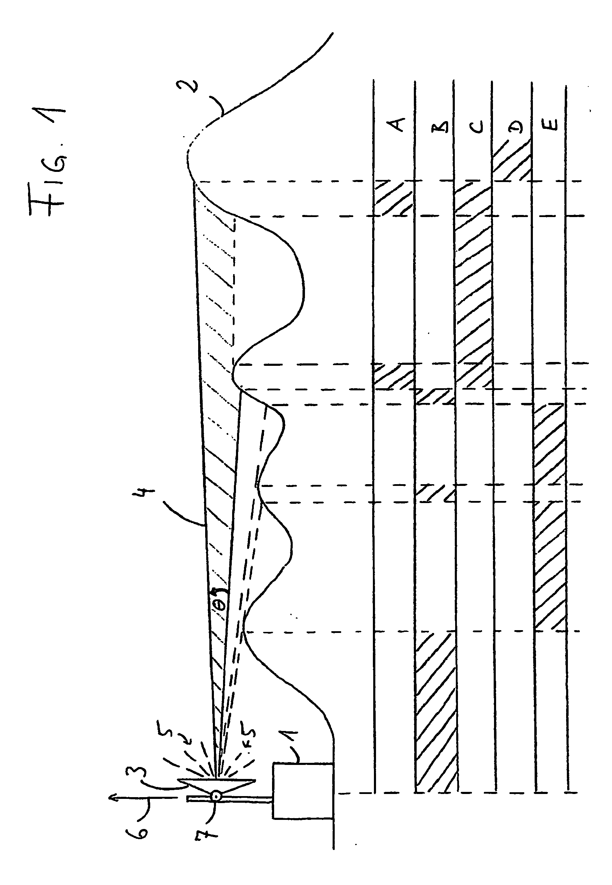

Das in Fig. 1 dargestellte Fernerkundungsgerät in Form eines Wetterradars 1 auf der Erdoberfläche 2 umfaß einen dreh- und/oder schwenkbaren Sende-/Empfangsspiegel 3 für einen zweckmäßigerweise gepulsten elektromagnetischen Strahl einer Wellenlänge insbesondere im Mikrowellenbereich mit einer Hauptstrahlungskeule 4, die mit ihrer 3dB-Breite θ dargestellt ist, und mehreren Nebenstrahlungskeulen 5.

Im Betrieb wird der dargestellte Wetterradar 1 um eine Hochachse 6 gedreht und/oder um eine sich zweckmäßigerweise mitdrehende Querachse 7 verschwenkt, um einen Raumwinkel oder gegebenenfalls einen Flächenwinkel abzufahren. Dabei werden über den Sende-/Empfangsspiegel 3 elektromagnetische Impulse ausgesendet, die von Objekten wie Wolken, Niederschlag, Gebäuden oder der Erdoberfläche 2 gegebenenfalls teilweise reflektiert und/oder absorbiert werden und am Sende-/Empfangsspiegel 3 mit Amplitude, Phase und/oder Polarisation detektierbare Echoimpule erzeugen. Die Echoimpulse werden als Funktion des Dreh- und/oder Schwenkwinkels sowie des aus der Laufzeit zwischen Aussenden eines Impulses und Empfangen des Echoimpulses berechneten Abstandes eines echogebenden Objekts erfaßt und zweckmäßigerweise für eine Auswertung gespeichert. Auf diese Weise werden Radarechodaten erhalten, die im Rahmen der erzielbaren Auflösung Informationen über jeden Punkt im abgefahrenen Raumbereich enthalten.

Echogebend sind nicht nur für die Wettererkundung gewünschte Ziele wie Wolken und Niederschlag, sondern auch unerwünschte Ziele wie Gebäude oder die Erdoberfläche 2. Bodenechos erzeugende Bereiche sind für die Hauptstrahlungskeule 4 in Zeile A und für die Nebenstrahlungskeulen 5 in Zeile B der Fig. 1 schraffiert dargestellt. Zudem treten wegen der unerwünschten Ziele teilweise und vollständige Abschattungen auf, die in Zeilen C bzw. D der Fig. 1 schraffiert dargestellt sind. Für die Wettererkundung gewünschte Ziele werden bei der in Fig. 1 dargestellten Position des Wetterradars 1 nur im in Zeile E schraffierten Bereich weder durch Bodenechos gestört noch abgeschattet.

Zum Korrigieren der vom Wetterradar 1 auf Basis von Radarechodaten gelieferten Wetterdaten Radialgeschwindigkeit V, spektrale Breite W und/oder differentielle Reflektivität ZDR wird zunächst eine Cluttermap $Z_{Cl}$ erstellt, d.h. eine Intensitätsverteilung von Bodenechos ohne Wetterechos. Diese kann unter wetterechofreien Bedingungen aufgenommen und gegebenenfalls per Hand oder automatisiert, insbesondere durch Mittelung verschiedener Aufnahmen, optimiert werden. Die Cluttermap $Z_{Cl}$ ist wie die Wetterdaten V, W und ZDR zweckmäßigerweise dreidimensional und eine Funktion des Abstands r, des Drehwinkels $\alpha$ und des Schwenkwinkels $\beta$, kann jedoch auch zweidimensional als Funktion des Abstands r und des Drehwinkels $\alpha$ oder nur eindimensional als Funktion des Abstands r sein. Gegebenenfalls werden kartesische Koordinaten verwendet. Die Koordinatenschrittgröße der Cluttermap $Z_{Cl}$ stimmt zweckmäßigerweise mit der Koordinatenschrittgröße der Wetterdaten V, W, ZDR überein.

Die Wetterdaten werden wie folgt korrigiert.

Eine korrigierte Radialgeschwindigkeit $V_{Wea}$ wird entsprechend

$$V_{Wea} = V \, (Z_{Cl} + Z_{Wea}) \, / \, Z_{Wea} \qquad\qquad (1)$$

berechnet, wobei V die noch nicht korrigierte Radialgeschwindigkeit, $Z_{Cl}$ die Intensität aus der Cluttermap und $Z_{Wea}$ die Intensität des Wettersignals ist.

Eine korrigierte spektrale Breite $W_{Wea}$ wird entsprechend

$$W_{Wea} = W \, (Z_{Cl} + Z_{Wea}) \, / \, Z_{Wea} \qquad\qquad (2)$$

berechnet, wobei W die noch nicht korrigierte spektrale Breite, $Z_{Cl}$ die Intensität aus der Cluttermap und $Z_{Wea}$ die Intensität des Wettersignals ist.

Eine korrigierte differentielle Reflektivität $ZDR_{Wea}$ wird entsprechend

$$ZDR_{Wea} = ZDR \, (Z_{Cl} + Z_{Wea}) \, / \, Z_{Wea} - ZDR_{Cl} \, Z_{Cl} \, / \, Z_{Wea} \qquad\qquad (3)$$

berechnet, wobei ZDR die noch nicht korrigierte differentielle Reflektivität, $Z_{Cl}$ die Intensität aus der Cluttermap, $Z_{Wea}$ die Intensität des Wettersignals und $ZDR_{Cl}$ die differentielle Reflektivität aus der Cluttermap ist.

Wenn die Bedingung

$$Z_{Wea} < Z_{Cl} \qquad\qquad (4)$$

und insbesondere

$$Z_{Wea} << Z_{Cl} \qquad\qquad (5)$$

erfüllt ist, können die Gleichungen (1) bis (3) instabile Ergebnisse liefern. In diesem Fall werden die jeweiligen Wetterdaten zweckmäßigerweise durch gewichtete Mittelwertbildung aus wenigstens zwei unabhängig erhaltenen korrigierten Werten wie folgt berechnet.

Für die Radialgeschwindigkeit V können wenigstens zwei der folgenden Werte zweckmäßigerweise gewichtet kombiniert verwendet werden:

Als ein Wert $W_1$ kann $V_{Wea}$ gemäß Gleichung (1) verwendet werden, gegebenenfalls mit einer Gewichtungsfunktion $g_1$, die mit zunehmendem Faktor $Z_{Wea} \, / \, Z_{Cl}$ zunimmt.

Weitere Werte $W_2$, $W_3$, $W_4$ können mittels Interpolation bestimmt werden. Zweckmäßigerweise werden die Werte $W_2$, $W_3$, $W_4$ aus benachbarten und von Clutter unbeeinträchtigten Daten für V entlang jeweils einer der drei Achsen des verwendeten Koordinatensystems, beispielsweise entlang des Drehwinkels $\alpha$, des Schwenkwinkels $\beta$ und/ oder des Abstands r interpoliert.

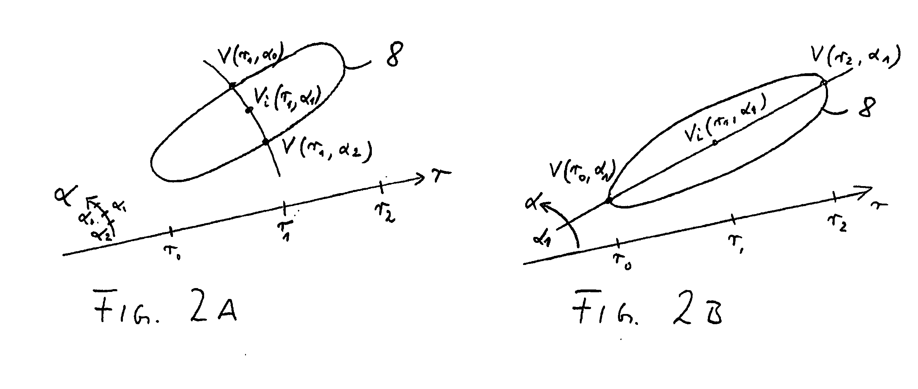

Die Interpolation ist beispielhaft in Fig. 2A für die Achse $\alpha$ illustriert. Der dort dargestellte zweidimensionale Koordinatenbereich 8 weist in der Cluttermap Einträge infolge Bodenechos auf. Der koordinatenmäßig entsprechende Bereich der gemessenen Radialgeschwindigkeit V wird ersetzt durch interpolierte Werte. Dargestellt ist beispielhaft der hier zwischen den gemessenen Werten V ($r_1$, $\alpha_0$) und V ($r_1$, $\alpha_2$) interpolierte Wert $V_i$ ($r_1$, $\alpha_1$):

$$W_2 = V_i(r_1, \alpha_1) = f(\alpha_1)\, V(r_1, \alpha_0) + (1 - f(\alpha_1))\, V(r_1, \alpha_2). \qquad (6)$$

Für den Interpolationsfaktor $f(\alpha_1)$ ist ein Wert zwischen 0 und 1 entweder fest oder entsprechend einer Funktion $f(\alpha)$ vorgebbar, wobei die Funktion $f(\alpha)$ zweckmäßigerweise linear zwischen $f(\alpha_0) = 1$ und $f(\alpha_2) = 0$ verläuft, so daß für $\alpha_1 = \frac{1}{2}(\alpha_0 + \alpha_2)$ der Interpolationsfaktor $f(\alpha_1) = \frac{1}{2}$ beträgt.

Gegebenenfalls ist für den Wert $W_2$ eine Gewichtungsfunktion $g_2$ vorgesehen, die zweckmäßigerweise mit zunehmendem Abstand, z.B. $\Delta = \alpha_2 - \alpha_1$, im dreidimensionalen Raum zwischen den Koordinatentripeln der zur Interpolation verwendeten Werte von V abnimmt.

Für den Wert $W_3$ kann eine Interpolation entlang der Achse $\beta$ analog zur Interpolation entlang der Achse $\alpha$ für den Wert $W_2$ durchgeführt werden. Dies ist zwar beispielsweise im in Fig. 1 in Zeile C dargestellten Bereich nicht möglich, da dort bodenseitig kein unbeeinträchtigter Bereich vorhanden ist. Können jedoch in Ausnahmefällen beispielsweise unterhalb sich quer erstreckender oder punktueller Hindernisse Meßwerte aufgenommen werden, kann der Wert $W_3$ sinnvoll berechnet und verwendet werden.

Für den Wert $W_4$ kann wie in Fig. 2B dargestellt eine Interpolation entlang der Achse r durchgeführt werden. Der beispielhaft dargestellte Wert $V_i$ ($r_1$, $\alpha_1$) ist hier zwischen den gemessenen Werten V ($r_0$, $\alpha_1$) und V ($r_2$, $\alpha_1$) interpoliert:

$$W_4 = V_i(r_1, \alpha_1) = f(r_1)\, V(r_0, \alpha_1) + (1 - f(r_1))\, V(r_2, \alpha_1). \qquad (7)$$

Für den Interpolationsfaktor $f(r_1)$ ist ein Wert zwischen 0 und 1 entweder fest oder entsprechend einer Funktion $f(r)$ vorgebbar, wobei die Funktion $f(r)$ zweckmäßigerweise linear zwischen $f(r_0) = 1$ und $f(r_2) = 0$ verläuft, so daß für $r_1 = \frac{1}{2}(r_0 + r_2)$ der Interpolationsfaktor $f(r_1) = \frac{1}{2}$ beträgt.

Gegebenenfalls ist für den Wert $W_4$ eine Gewichtungsfunktion $g_4$ vorgesehen, die zweckmäßigerweise mit zunehmendem Abstand, z.B. $\Delta = r_2 - r_0$, im dreidimensionalen Raum zwischen den Koordinatentripeln der zur Interpolation verwendeten Werte von V abnimmt.

Ein weiterer Wert $W_5$ kann basierend auf einer vertikalen Extrapolation berechnet werden, insbesondere bei einer Abschattung vertikal von oben nach unten wie für den Bereich in Zeile C der Fig. 1. Die vertikale Extrapolation wird zweckmäßigerweise entlang $\beta$ oder gegebenenfalls entlang der kartesischen Koordinate z jeweils vom unbeeinträchtigten Bereich oberhalb der Abschattung nach unten in den abgeschatteten Bereich durch die einzelnen $(\alpha,r)$-Ebenen, die durch die $\beta$-Koordinaten im abgetasteten Raum festgelegt sind, hindurch durchgeführt. Gegebenenfalls wird für den Wert $W_5$ eine Gewichtungsfunktion $g_5$ vorgesehen, die zweckmäßigerweise mit zunehmendem vertikalen Abstand im dreidimensionalen Raum zum zur Extrapolation verwendeten unbeeinträchtigten Bereich ab- und/oder mit einem Zuverlässigkeitsmaß eines zuvor bestimmten Vertikalprofils der Radialgeschwindigkeit zunimmt. Sofern ein Wert $W_3$ für eine vertikale Interpolation berechenbar ist, kann auf $W_5$ verzichtet bzw. die Gewichtungsfunktion $g_5$ auf einen kleinen Wert oder 0 gesetzt werden.

Aus den unabhängig berechneten korrigierten Werten $W_1$ bis $W_5$ können eine beliebige Anzahl i linear oder mittels der jeweiligen Gewichtungsfunktion zu einem einzigen korrigierten Wert $V_{Wea}$ für die Radialgeschwindigkeit an dem jeweiligen Punkt kombiniert werden:

$$V_{Wea} = \sum_i g_i W_i, \ i=1, 2, 3, \ldots \qquad (8)$$

Für die weiteren Wetterdaten spektrale Breite und differentielle Reflektivität können als Wert $W_1$ $W_{Wea}$ gemäß

Gleichung (2) bzw. $ZDR_{Wea}$ gemäß Gleichung (3) verwendet sowie analog zur Radialgeschwindigkeit berechnete Werte $W_2$ bis $W_5$ und Gewichtungsfunktionen $g_1$ bis $g_5$ verwendet werden.

Die Gewichtungsfunktionen insbesondere für die Inter- und Extrapolation können zudem insbesondere diskontinuierlich auf 0 oder 1, gegebenenfalls 1/i, abfallen bzw. ansteigen, wenn empirisch vorgebbare Schwellenwerte über- bzw. unterschritten werden, beispielsweise der Abstand zwischen den zur Interpolation verwendeten Werten zu groß bzw. hinreichend klein ist.

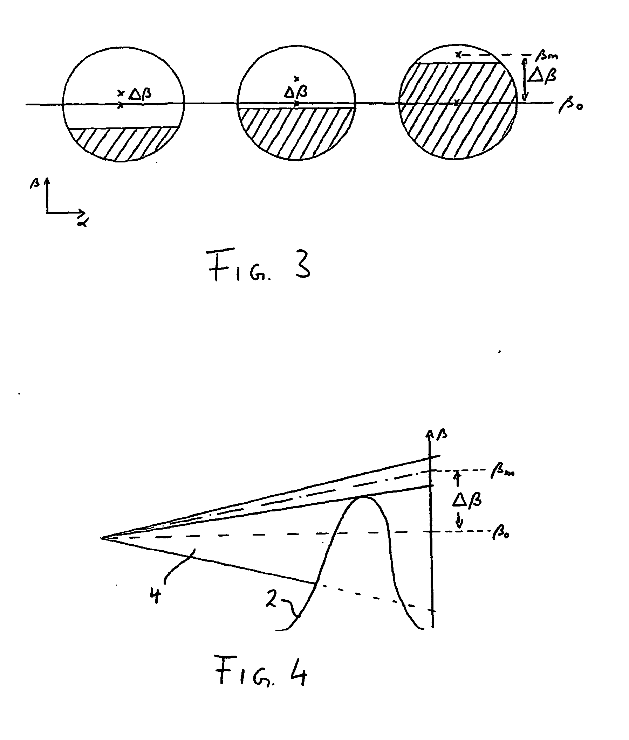

Im in Zeile C der Fig. 1 schraffierten Bereich ist die Hauptstrahlungskeule 4 teilweise abgeschattet. Ein Querschnitt durch die Hauptstrahlungskeule 4 für verschiedene Werte der Abschattung ist in Fig. 3 illustriert. Bei der Korrektur der Wetterdaten wird erfindungsgemäß der in Fig. 3, 4 illustrierte Höhenunterschied $\Delta\beta$ zwischen der mittleren Höhe $\beta_m$ des verbleibenden Teils der teilweise abgeschatteten Hauptstrahlungskeule 4 und der Mitte $\beta_0$ der Hauptstrahlungskeule 4 derart berücksichtigt, daß ein Meßwert für ein Wetterdatum nicht der Koordinate $\beta_0$ sondern der Koordinate $\beta_m = \beta_0 + \Delta\beta$ zugeordnet wird.

Die mittlere Höhe $\beta_m$ des verbleibenden Teils der teilweise abgeschatteten Hauptstrahlungskeule 4 wird zweckmäßigerweise aus der Intensitätsverteilung $I(\alpha, \beta)$ des Radarstrahls berechnet. Hierbei wird die Intensitätsverteilung über den gesamten Querschnitt, in dem der Radarstrahl eine nicht vernachlässigbar geringe Intensität aufweist, berücksichtigt. Dieser Querschnitt ist größer als der dargestellte 3dB-Querschnitt und abhängig von der Geometrie des Sende-/Empfangsspiegels 3. Zur Illustration ist $\beta_m$ grob angenähert mittig im verbleibenden Teil der teilweise abgeschatteten Hauptstrahlungskeule 4 dargestellt.

Der Höhenunterschied $\Delta\beta$ kann für eine Extrapolation aus einem Vertikalprofil der jeweiligen Wetterdaten verwendet werden. Hierzu wird das gemessene Vertikalprofil um den Höhenunterschied $\Delta\beta$ nebst zugehörigem Wetterdatenwert nach unten verlängert, und basierend auf dem verlängerten Vertikalprofil wird eine Extrapolation vertikal nach unten durchgeführt. Gegebenenfalls wird der so erhaltene korrigierte Wert als weiterer Wert $W_6$ zur gewichteten Kombination mit den Werten $W_1$ bis $W_5$ verwendet. Hierbei kann eine Gewichtungsfunktion $g_6$ verwendet werden, die z.B. mit zunehmendem Grad der Abschattung oder mit zunehmendem Höhenunterschied $\Delta\beta$ abnimmt.

Das Verfahren ist in einer dem Wetterradar nachgeschalteten Vorrichtung in Form einer Datenverarbeitungsanlage mit einer Dateneingabevorrichtung zum Empfangen der zu korrigierenden Wetterdaten und einer Datenausgabevorrichtung zum Ausgeben der korrigierten Wetterdaten durchführbar. Hierzu kann ein zum Durchführen des Verfahrens erforderliche Instruktionen und Daten enthaltendes Computerprogrammprodukt über einen Datenträger und/oder ein Datennetz in die Vorrichtung geladen werden.

**Patentansprüche**

1. Verfahren zum Korrigieren von Wetterdaten, die aus von einem bodengestützten, radarbasierten Fernerkundungsgerät (1) zur Messung atmosphärischer Bedingungen aufgenommenen, auswertbare Wetter- und störende Bodenechos enthaltenden Radarechodaten gewonnen worden sind, **dadurch gekennzeichnet, dass** als korrigierte Wetterdaten die aus den Radarechodaten gewonnene differentielle Reflektivität durch Herausrechnen der störenden Bodenechos aus den gewonnen Wetterdaten unter Verwendung einer zuvor gespeicherten Cluttermap mit einer Intensitätsverteilung von Radarechodaten, die die Bodenechos im wesentlichen ohne Wetterechos enthalten, neu berechnet wird.

2. Verfahren nach Anspruch 1, **dadurch gekennzeichnet, dass** die korrigierte differentielle Reflektivität $ZDR_{Wea}$ entsprechend $ZDR_{Wea} = ZDR (Z_{Cl} + Z_{Wea}) / Z_{Wea} - ZDR_{Cl} Z_{Cl} / Z_{Wea}$ neu berechnet wird, wobei ZDR die aus den Radarechodaten gewonnene differentielle Reflektivität, $Z_{Cl}$ die Intensität aus der Cluttermap, $Z_{Wea}$ die Intensität des Wettersignals und $ZDR_{Cl}$ die differentielle Reflektifität aus der Cluttermap ist.

3. Verfahren nach Anspruch 1 oder 2, **dadurch gekennzeichnet, dass** die Radialgeschwindigkeit $V_{Wea}$ entsprechend $V_{Wea} = V (Z_{Cl} + Z_{Wea}) / Z_{Wea}$ neu berechnet wird, wobei V die aus den Radarechodaten gewonnene Radialgeschwindigkeit, $Z_{Cl}$ die Intensität aus der Cluttermap und $Z_{Wea}$ die Intensität des Wettersignals ist.

4. Verfahren nach einem der Ansprüche 1 bis 3, **dadurch gekennzeichnet, dass** die spektrale Breite $W_{Wea}$ entsprechend $W_{Wea} = W (Z_{Cl} + Z_{Wea}) / Z_{Wea}$ neu berechnet wird, wobei W die aus den Radarechodaten gewonnene spektrale Breite, $Z_{Cl}$ die Intensität aus der Cluttermap und $Z_{Wea}$ die Intensität des Wettersignals ist.

5. Verfahren nach Anspruch 1, **dadurch gekennzeichnet, daß** die korrigierte Radialgeschwindigkeit, spektrale Breite bzw. differentielle Reflektivität durch gewichtete Mittelwertbildung aus wenigstens zwei unabhängig erhaltenen Werten berechnet wird, wenn die Bedingung $Z_{Wea} < Z_{Cl}$ erfüllt ist, wobei $Z_{Cl}$ die Intensität aus der Cluttermap und $Z_{Wea}$ die Intensität des Wettersignals ist.

6. Verfahren nach Anspruch 5, **dadurch gekennzeichnet, daß** als einer der Werte $V_{Wea}$ gemäß Anspruch 3, $W_{Wea}$ gemäß Anspruch 4 bzw. $ZDR_{Wea}$ gemäß Anspruch 2 verwendet wird.

7. Verfahren nach Anspruch 6, **dadurch gekennzeichnet, daß** zum Gewichten eine Gewichtungsfunktion verwendet wird, die mit zunehmendem Faktor $Z_{Wea}/Z_{CI}$ zunimmt.

8. Verfahren nach einem der Ansprüche 5 bis 7, **dadurch gekennzeichnet, daß** einer der Werte mittels radialer Interpolation aus von Clutter unbeeinträchtigen Bereichen (E) berechnet wird.

9. Verfahren nach Anspruch 8, **dadurch gekennzeichnet, daß** zum Gewichten eine Gewichtungsfunktion verwendet wird, die mit zunehmendem Abstand zwischen den nächstgelegenen von Clutter unbeeinträchtigten Bereichen (E) abnimmt.

10. Verfahren nach Anspruch 9, **dadurch gekennzeichnet, daß** ein azimutaler Abstand und/oder ein radialer Abstand verwendet werden.

11. Verfahren nach einem der Ansprüche 5 bis 10, **dadurch gekennzeichnet, daß** einer der Werte durch vertikale Extrapolation aus einem Vertikalprofil der Radialgeschwindigkeit, der spektralen Breite bzw. der differentiellen Reflektivität verwendet wird.

12. Verfahren nach Anspruch 11, **dadurch gekennzeichnet, daß** zum Gewichten eine Gewichtungsfunktion verwendet wird, die mit zunehmendem vertikalen Abstand zum nächstgelegenen von Clutter unbeeinträchtigten Bereich abnimmt.

13. Verfahren nach Anspruch 11 oder 12, **dadurch gekennzeichnet, daß** zum Gewichten eine Gewichtungsfunktion verwendet wird, die mit zunehmender Zuverlässigkeit des Vertikalprofils zunimmt.

14. Verfahren nach einem der Ansprüche 5 bis 10, **dadurch gekennzeichnet, daß** die mittlere Höhe ($\beta_m$) des verbleibenden Teils eines durch ein Hindernis teilweise abgeschatteten Radarstrahls (4) bestimmt und einer der Werte aus einem Vertikalprofil der jeweiligen aus den Radarechodaten gewonnenen Wetterdaten unter Berücksichtigung der mittleren Höhe ($\beta_m$) berechnet wird.

15. Verfahren nach Anspruch 14, **dadurch gekennzeichnet, daß** die Abschattung berechnet und zum Gewichten eine Gewichtungsfunktion verwendet wird, die mit zunehmender Abschattung abnimmt.

16. Verfahren nach einem der Ansprüche 8 bis 15, **dadurch gekennzeichnet, daß** als von Clutter unbeeinträchtige Bereiche (E) Bereiche verwendet werden, in denen das Verhältnis aus den Intensitäten der Wetter- und Bodenechos oberhalb eines vorgebbaren Schwellenwerts liegt.

17. Verfahren nach einem der Ansprüche 8 bis 16, **dadurch gekennzeichnet, daß** als von Clutter unbeeinträchtige Bereiche (E) Bereiche verwendet werden, in denen die Abschattung unterhalb eines vorgebbaren Schwellenwerts liegt.

18. Vorrichtung zum Korrigieren von Wetterdaten, die aus von einem bodengestützten, radarbasierten Fernerkundungsgerät (1) zur Messung atmosphärischer Bedingungen aufgenommenen, auswertbare Wetter- und störende Bodenechos enthaltenden Radarechodaten gewonnen worden sind, **dadurch gekennzeichnet, daß** die Vorrichtung zum Berechnen korrigierter Wetterdaten der differentiellen Reflektivität durch Herausrechnen der störenden Bodenechos aus den gewonnen Wetterdaten unter Verwendung einer zuvor gespeicherten Cluttermap mit einer Intensitätsverteilung von Radarechodaten, die die Bodenechos im wesentlichen ohne Wetterechos enthalten, ausgestaltet ist.

19. Vorrichtung nach Anspruch 18, **dadurch gekennzeichnet, daß** sie zum Durchführen des Verfahrens nach einem der Ansprüche 2 bis 17 ausgestaltet ist.

20. Computerprogrammprodukt mit darauf gespeicherten oder zumindest teilweise über ein Datennetz abrufbaren Instruktionen, **dadurch gekennzeichnet, daß** bei Ausführung auf einer Vorrichtung insbesondere nach Anspruch 18 oder 19 das Verfahren nach einem der Ansprüche 1 bis 17 durchführbar ist.

**Claims**

1. Method for correcting weather data which have been acquired from radar echo data recorded by a ground-based, radar-based remote-sensing appliance (1) for measuring atmospheric conditions and including evaluable weather echoes and interfering ground echoes, **characterized in that** as corrected weather data the differential reflectivity acquired from the radar echo data is recalculated by calculating out the interfering ground echoes from the acquired weather data by using a previously stored clutter map with an intensity distribution of radar echo data which include the ground echoes substantially without weather echoes.

2. Method according to Claim 1, **characterized in that** the corrected differential reflectivity $ZDR_{Wea}$ is recalculated according to $ZDR_{Wea} = ZDR (Z_{Cl} + Zwea) / Zwea - ZDR_{CL} Z_{CL} / Z_{Wea}$, ZDR being the differential reflectivity acquired from the radar echo data, $Z_{Cl}$ being the intensity from the clutter map, $Z_{Wea}$ being the intensity of the weather signal, and $ZDR_{CL}$ being the differential reflectivity from the clutter map.

3. Method according to Claim 1 or 2, **characterized in that** the radial speed $V_{Wea}$ is recalculated according to $V_{Wea} = V (Z_{Cl} + Z_{Wea}) / Z_{Wea}$, V being the radial speed acquired from the radar echo data, $Z_{Cl}$ being the intensity from the clutter map, and $Z_{Wea}$ being the intensity of the weather signal.

4. Method according to one of Claims 1 to 3, **characterized in that** the spectral width $W_{Wea}$ is recalculated according to $W_{Wea} = W (Z_{Cl} + Z_{Wea}) / Z_{Wea}$, W being the spectral width acquired from the radar echo data, $Z_{Cl}$ being the intensity from the clutter map, and $Z_{Wea}$ being the intensity of the weather signal.

5. Method according to Claim 1, **characterized in that** the corrected radial speed, spectral width and/or differential reflectivity are calculated by forming the weighted mean of at least two independently obtained values when the condition $Z_{Wea} < Z_{Cl}$ is fulfilled, $Z_{Cl}$ being the intensity from the clutter map and $Z_{Wea}$ being the intensity of the weather signal.

6. Method according to Claim 5, **characterized in that** use is made of $V_{Wea}$ according to Claim 3 or $W_{Wea}$ according to Claim 4 as one of the values $ZDR_{Wea}$ according to Claim 2.

7. Method according to Claim 6, **characterized in that** a weighting function which increases with an increasing factor $Z_{Wea}/Z_{Cl}$ is used for weighting.

8. Method according to one of Claims 5 to 7, **characterized in that** one of the values is calculated by means of radial interpolation from areas (E) unaffected by clutter.

9. Method according to Claim 8, **characterized in that** a weighting function which decreases with an increasing distance between the closest areas (E) unaffected by clutter is used for weighting.

10. Method according to Claim 9, **characterized in that** an azimuthal distance and/or a radial distance are used.

11. Method according to one of Claims 5 to 10, **characterized in that** one of the values is used through vertical extrapolation from a vertical profile of the radial speed, the spectral width and the differential reflectivity.

12. Method according to Claim 11, **characterized in that** a weighting function which decreases with an increasing vertical distance from the closest area unaffected by clutter is used for weighting.

13. Method according to Claim 11 or 12, **characterized in that** a weighting function which increases with an increasing reliability of the vertical profile is used for weighting.

14. Method according to one of Claims 5 to 10, **characterized in that** the mean height ($\beta_m$) of the remaining part of a radar beam (4) partially shaded by an obstacle is determined, and one of the values is calculated, taking account of the mean height ($\beta_m$), from a vertical profile of the respective weather data acquired from the radar echo data.

15. Method according to Claim 14, **characterized in that** the shading is calculated, and a weighting function which decreases with an increasing shading is used for weighting.

16. Method according to one of Claims 8 to 15, **characterized in that** areas in which the ratio of the intensities of the weather echoes and ground echoes lies above a prescribable threshold are used as areas (E) unaffected by clutter.

17. Method according to one of Claims 8 to 16, **characterized in that** areas in which the shading lies below a prescribable threshold are used as areas (E) unaffected by clutter.

18. Apparatus for correcting weather data which have been acquired from radar echo data recorded by a ground-based, radar-based remote-sensing appliance (1) for measuring atmospheric conditions and including evaluable weather echoes and interfering ground echoes, **characterized in that** the apparatus is fashioned for calculating corrected weather data of the differential reflectivity by calculating out the interfering ground echoes from the acquired weather data by using a previously stored clutter map with an intensity distribution of radar echo data which include the ground echoes substantially without weather echoes.

19. Apparatus according to Claim 18, **characterized in that** it is fashioned for carrying out the method according to one of Claims 2 to 17.

20. Computer program product with instructions stored thereon or capable at least partially of being retrieved via a data network, **characterized in that** the method according to one of Claims 1 to 17 can be carried out in the event of execution on an apparatus according, particularly, to Claim 18 or 19.

**Revendications**

1. Procédé pour corriger des données météorologiques qui ont été acquises à partir d'échos radar enregistrés par un appareil de télédétection (1) radar basé au sol pour mesurer des conditions atmosphériques, et contenant des échos mesurables de la météo et des interférences terrestres, **caractérisé en ce que** la réflexivité différentielle acquise à partir des échos radar est calculée à nouveau, en tant que données météorologiques corrigées, par l'obtention des échos d'interférence terrestre à partir des données météorologiques acquieses en appliquant une carte d'interférence terrestre mémorisée au préalable avec une distribution d'intensité de données d'échos radar qui contiennent les échos d'interférence terrestre substantiellement sans échos météorologiques.

2. Procédé selon la revendication 1, **caractérisé en ce que** la réflexivité différentielle corrigée $ZDR_{Wea}$ correspondant à $ZDR_{Wea} = ZDR (Z_{CI} + Z_{Wea}) / Z_{Wea} - ZDR_{CI} Z_{CI} / Z_{Wea}$ est calculée à nouveau, ZDR étant la réflexivité différentielle acquise à partir des échos radar, $Z_{CI}$ l'intensité de la carte d'interférence terrestre, $Z_{Wea}$ l'intensité du signal météorologique et $ZDR_{CI}$ la réflexivité différentielle de la carte d'interférence terrestre.

3. Procédé selon la revendication 1 ou 2, **caractérisé en ce que** la vitesse radiale $V_{Wea}$ correspondant à $V_{Wea} = V (Z_{CI} + Z_{Wea}) / Z_{Wea}$ est calculée à nouveau, V étant la vitesse radiale acquise à partir des échos radar, $Z_{CI}$ l'intensité de la carte d'interférence terrestre, et $Z_{Wea}$ l'intensité du signal météorologique.

4. Procédé selon l'une des revendications 1 à 3, **caractérisé en ce que** la largeur de bande spectrale $W_{Wea}$ correspondant à $W_{Wea} = W (Z_{CI} + Z_{Wea}) / Z_{Wea}$ est calculée à nouveau, W étant la largeur de bande spectrale acquise à partir des échos radar, $Z_{CI}$ l'intensité de la carte d'interférence terrestre, et $Z_{Wea}$ l'intensité du signal météorologique.

5. Procédé selon la revendication 1, **caractérisé en ce que** la vitesse radiale, largeur de bande spectrale et respectivement réflexivité différentielle corrigées sont calculées par constitution de moyennes pondérées à partir d'au moins deux valeurs obtenues indépendamment, lorsque la condition $Z_{Wea} < Z_{CI}$ est remplie, $Z_{CI}$ étant l'intensité de la carte d'interférence terrestre, et $Z_{Wea}$ l'intensité du signal météorologique.

6. Procédé selon la revendication 5, **caractérisé en ce que** l'une des valeurs $V_{Wea}$, selon la revendication 3, $W_{Wea}$, selon la revendication 4, ou respectivement $ZDR_{Wea}$ selon la revendication 2 sont utilisées.

7. Procédé selon la revendication 6, **caractérisé en ce qu'**une fonction de pondération qui croît avec le facteur $Z_{Wea} / Z_{CI}$ est utilisée pour la pondération.

8. Procédé selon l'une des revendications 5 à 7, **caractérisé en ce qu'**une des valeurs est calculée au moyen d'une interpolation radiale à partir de domaines (E) exempts d'interférences.

9. Procédé selon la revendication 8, **caractérisé en ce qu'**une fonction de pondération qui diminue avec l'augmentation de la distance avec les domaines (E) exempt d'interférences le plus proche est utilisée pour la pondération.

10. Procédé selon la revendication 9, **caractérisé en ce qu'**une distance azimutale et/ou une distance radiale sont utilisées.

11. Procédé selon l'une des revendications 5 à 10, **caractérisé en ce qu'**une des valeurs est utilisée par une extrapolation verticale à partir d'un profil vertical de la vitesse radiale, de la largeur de bande spectrale et respectivement de la réflexivité différentielle.

12. Procédé selon la revendication 11, **caractérisé en ce qu'**une fonction de pondération qui diminue avec l'augmentation de la distance verticale avec le domaine exempt d'interférences le plus proche est utilisée pour la pondération.

13. Procédé selon la revendication 11 ou 12, **caractérisé en ce qu'**une fonction de pondération qui augmente avec celle de la fiabilité du profil vertical est utilisée pour la pondération.

14. Procédé selon l'une des revendications 5 à 10, **caractérisé en ce qu'**on détermine la hauteur moyenne ($\beta_m$) de la partie restante d'un faisceau radar (4) dégradé partiellement par un obstacle, et qu'une des valeurs est calculée depuis un profil vertical des données météorologiques respectives acquises à partir des données d'échos radar en considérant la hauteur moyenne ($\beta_m$).

15. Procédé selon la revendication 14, **caractérisé en ce que** la dégradation est calculée, et utilisée pour la pondération d'une fonction de pondération qui diminue avec l'augmentation de la dégradation.

16. Procédé selon l'une des revendications 8 à 15, **caractérisé en ce que** les domaines utilisés comme domaines (E) exempts d'interférences sont ceux dans lesquels le rapport des intensités entre les échos météorologiques et les échos d'interférence terrestre est supérieur à un seuil prédéfini.

17. Procédé selon l'une des revendications 8 à 16, **caractérisé en ce que** les domaines utilisés comme domaines (E) exempts d'interférences sont ceux dans lesquels la dégradation est inférieure à un seuil prédéfini.

18. Dispositif pour corriger des données météorologiques qui ont été acquises à partir d'échos radar enregistrés par un appareil de télédétection (1) radar basé au sol pour mesurer des conditions atmosphériques, et contenant des échos mesurables de la météo et des interférences terrestres, **caractérisé en ce que** le dispositif est pourvu, pour le calcul de données corrigées météorologiques, de la réflexivité différentielle obtenue par calcul des échos d'interférence terrestre à partir des données météorologiques acquises en appliquant une carte d'interférence terrestre mémorisée au préalable avec une distribution d'intensité des données d'échos radar qui contiennent les échos d'interférence terrestre substantiellement sans échos météorologiques.

19. Procédé selon la revendication 19, **caractérisé en ce qu'**il est agencé pour exécuter les étapes de l'une des revendications 2 à 17.

20. Progiciel informatique comprenant des instructions sauvegardées ou au moins partiellement téléchargeables depuis un réseau de données, **caractérisé en ce qu'**un procédé selon l'une des revendications 1 à 17 est exécutable pour une mise en oeuvre sur un dispositif en particulier selon les revendications 18 ou 19.

FIG. 1

EP 1 889 092 B1

FIG. 2A

FIG. 2B

EP 1 889 092 B1

FIG. 3

FIG. 4

**EP 1 889 092 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur

- **Aus J.E. Evans et al.** *TERMINAL DOPPLER WEATHER RADAR CLUTTER CONTROL,* 1990, 12-16

- **L.P. Ligthart et al.** An X-band solid-state FM-CW weather radar. *IEEE Proceedings,* 1990, vol. 137, 418-426